# EUROPÄISCHE PATENTSCHRIFT

(11) **EP 1 698 079 B1**
(45) Veröffentlichungstag und Bekanntmachung des Hinweises auf die Patenterteilung: **18.04.2007**
(21) Anmeldenummer: 04786725.4
(22) Anmeldetag: 09.09.2004
(51) Int. Cl.: H04B 10/17, H04L 7/00

(54) **WELLENLÄNGEN-ERHALTENDER OPTISCHER SIGNALREGENERATOR**
WAVELENGTH-MAINTAINING OPTICAL SIGNAL REGENERATOR
REGENERATEUR DE SIGNAL OPTIQUE A CONSERVATION DE LONGUEUR D'ONDE

(30) Priorität: 19.09.2003 DE 10344319
(43) Veröffentlichungstag der Anmeldung: 06.09.2006
(73) Patentinhaber: Fraunhofer-Gesellschaft zur Förderung der angewandten Forschung e.V., 80686 München (DE)
(72) Erfinder: BORNHOLDT, Carsten, 14089 Berlin (DE); SARTORIUS, Bernd, 14052 Berlin (DE); SLOVAK, Juraj, 10551 Berlin (DE)
(86) Internationale Anmeldenummer: PCT/DE2004/002003
(87) Internationale Veröffentlichungsnummer: WO 2005/029734

(56) Entgegenhaltungen:
- WO-A2-02/084900
- US-A- 5 798 852
- SARTORIUS B ED - OPTICAL SOCIETY OF AMERICA / INSTITUTE OF ELECTRICAL AND ELECTRONICS ENGINEERS: "All-optical clock recovery for 3R optical regeneration" OPTICAL FIBER COMMUNICATION CONFERENCE. (OFC). TECHNICAL DIGEST POSTCONFERENCE EDITION. ANAHEIM, CA, MARCH 17 - 22, 2001, TRENDS IN OPTICS AND PHOTONICS SERIES. TOPS. VOLUME 54, WASHINGTON, WA : OSA, US, Bd. 1, 2001, Seiten MG71-MG73, XP010546026 ISBN: 1-55752-655-9

## Beschreibung

Die Erfindung betrifft einen wellenlängen-erhaltenden optischen Signalregenerator.

Die Regeneration degradierter Signale ist eine wichtige Funktion der optischen Signalverarbeitung. Degradationen bei digitalen Datensignalen sind Amplitudenschwankungen der "1" Bits, zeitlicher Jitter der "1" Bits sowie Rauschen und Störsignale in der Zeitlage der "0" Bits. Zeichnet man alle Datenbits periodisch übereinander, so ergibt sich das so genannte Augendiagramm, das für eine fehlerfreie Datenerkennung klar offen sein muss.

Die verschiedenen Degradationen müssen für eine fehlerfreie Datenübertragung in einem so genannten 3R Regenerator (Re-Amplification, Re-Timing, Re-Shaping) durch bestimmte Funktionselemente beseitigt werden, wie z.B. durch den "Entscheider", einen Schwellwert-Schalter mit möglichst digitaler Schalt-Charakteristik, und den "Taktregenerator", der aus einem degradierten Datensignal einen Strom von synchronisierten, in Amplitude und Zeittakt stabilen Pulsen erzeugt. Diese Funktionselemente müssen für die Regeneration in einem optischen Schaltkreis mit geeigneter Architektur regenerativ zusammenwirken.

Für die Realisierung der beschriebenen Funktionen werden nichtlineare optische Bauelemente auf Halbleiterbasis wegen ihrer Kompaktheit und ihres relativ geringen Leistungsbedarfs bevorzugt.

Bezüglich der Taktregeneration bei hohen Datenraten (10 / 40 / 160 GHz) wurden in den letzten Jahren selbstpulsierende DFB-Laser in verschiedenen Ausführungsformen entwickelt. Hochfrequente optische Taktregeneratoren sind damit vorhanden.

Problematisch dagegen sind Entscheider auf Halbleiterbasis sowie Schaltkreis-Architekturen, die auf eine Wellenlängen-Konversion verzichten können.

Das bekannteste optische Funktionselement auf Halbleiterbasis, das als Entscheider eingesetzt werden kann, ist der sättigbare Absorber (SA). Signale kleiner Leistung (z.B. Rauschen bei "0" Bits) werden in diesem absorbiert, bei Erhöhung der Signalleistung (z.B. die "1" Bits) tritt aber dann eine Absorptionssättigung und ein Ausbleichen auf, so dass der Absorber transparent wird. Der Absorber kann so die schwachen Störungen aus dem Datensignal entfernen. Der SA kann auch als optisch gesteuerter Schalter benutzt werden. Ein zusätzlich zu einem starken Datensignal eingestrahltes schwaches konstantes Signal anderer Wellenlänge oder zu den Datenbits synchronisierte Taktpulse werden entsprechend der "1" oder "0" Bits im Datensignal durchgelassen oder abgeblockt, wodurch die Dateninformation auf die neue Trägerwellenlänge aufgeprägt wird - und zwar regenerativ bei geeigneter Schaltcharakteristik mit einem Schwellwert.

Ein weiteres viel benutztes nichtlineares Funktionselement ist der optische Halbleiterverstärker (Semiconductor Optical Amplifier, SOA). Eingestrahlte Signale kleiner Leistung werden linear verstärkt, bei Einstrahlung größerer Signale wird aber schließlich eine Sättigungs-Ausgangsleistung erreicht, d.h. die Verstärkung wird hier immer kleiner, wodurch die Verstärkung eines anderen schwächeren Signals anderer Wellenlänge beeinflusst werden kann (Kreuz-Verstärkungs-Modulation, oft benutzt zur Wellenlängenkonversion). Eine regenerative Schaltcharakteristik wird allerdings erst erreicht, wenn die SOA in eine interferometrische Anordnung eingebracht und so die mit den Verstärkungs- und Ladungsträgerdichte-Modulationen verbundenen Brechungsindex-Änderungen ausgenutzt werden.

Problematisch beim Einsatz in der schnellen Signalverarbeitung ist das Zeitverhalten der optischen Funktionselemente auf Halbleiterbasis, da diese die durch Absorption oder Verstärkung des optischen Signals bewirkte Änderung der Ladungsträgerdichte im Leitungsband bzw. Valenzband des Halbleiters ausnutzen. So folgt zwar bei Einstrahlung eines Datenpulses und bei dessen Absorption oder Verstärkung die Ladungsträgerdichte praktisch verzögerungsfrei (schneller als fs) dem optischen Signal, nach Abfallen des optischen Signals relaxiert die Ladungsträgerdichte aber wesentlich langsamer, nämlich mit den Zeitkonstanten des freien Halbleiters im Bereich Nano-Sekunden. Besonders kritisch wirkt sich dieses Verhalten aus, wenn Datenmuster bearbeitet werden müssen. Test-Sequenzen in der Telekommunikation beinhalten sowohl Folgen mit alternierenden "0" und "1" Bits als auch Serien von bis zu 31 folgenden gleichen Bits. Dem Fachmann ist bekannt, dass der Absorber schon bei einem 10 Gb/s Datensignal zwischen den Bits nicht ausreichend in den Gleichgewichtszustand relaxiert und somit sehr starke Datenmuster-Effekte aufweist. Nach einer "0" Folge öffnet der SA bei Ankommen eines "1" Bits zeitlich verzögert und nicht vollständig, und zwischen zwei aufeinander folgenden "1" Bits wird eine wesentliche Absorption nicht erreicht. Die Schaltkurve des SA ist im Vergleich zum ansteuernden Datensignal degradiert, das Bauelement kann so nicht zur Regeneration eingesetzt werden.

Auch für den SOA gilt, dass die nichtlineare Charakteristik stark von der Vorgeschichte abhängt. Ein Datenpuls nach einer langen "0" Folge trifft auf einen "erholten" ungesättigten SOA und wird entsprechend hoch verstärkt, während ein Datenpuls nach langer "1" Bit Folge auf einen gesättigten SOA trifft und so nur geringfügig verstärkt wird.

Von Nachteil wirkt sich also für beide beschriebenen Halbleiter-Funktionselemente deren Datenmuster-Abhängigkeit aus.

In den dem Stand der Technik nach bisher bekannten Regeneratoren steuert das Datensignal mit hoher Leistung ein nichtlineares Entscheider-Element an (basierend z.B. auf sättigbaren Absorbern oder Halbleiterverstärkern integriert in Interferometern), das als Transmissions-/Blockier-Schalter wirkt und die Dateninformation auf ein den Halbleiter ebenfalls durchstrahlendes Takt-Signal anderer Wellenlänge überträgt. Das Entscheider-Element muss hier eine stufenförmige Schaltcharakteristik mit einer Entscheider-Schwelle bezüglich der Eingangspegel und einem hohen Schaltkontrast zwischen "0" und "1" Bits für die Ausgangssignale haben und diese Funktion muss auch noch bei hohen Datenraten und unabhängig von Datenmustern gewährleistet sein. Es werden deshalb erhebliche Anstrengungen unternommen um Halbleiter-Materialien mit schnelleren Zeitkonstanten zu entwickeln (ECOC 2000, Munich, invited paper We 9.4.1, Conf. Dig. We pp.293-296).

In einer Weiterentwicklung des obigen Verfahrens (s. beispielsweise DE 101 18 959 A1 und ECOC 2002, C. Bornholdt, J. Slovak, and B. Sartorius: "Novel 3R Regenerator Concept Demonstrated at 40 Gb/s", ECOC 2002, post deadline paper PD 4.8, Copenhagen, Denmark, 2002) steuern Daten- und Taktsignal (verzögert gegeneinander um ein halbes Bit) das Entscheider-Element an und übertragen die Dateninformation auf ein ebenfalls eingestrahltes konstantes Signal einer anderer Wellenlänge. Die Anforderungen an den Entscheider entsprechen den bereits oben genannten, von Vorteil ist bei dieser Lösung die flexible Wahl der Ausgangswellenlänge unabhängig von der Takt-Wellenlänge.

Dem Stand der Technik nach ist auch ein Verfahren bekannt, das ohne Wellenlängen-Konversion arbeitet (beschrieben von O. Leclerc et al. in "Regenerated 40 Gb/s Long-Haul Transmission Using All-Optical SOA-MZI as Loss-Free Synchronous Modulator", Paper WF6-1 in Technical Digest of Optical Fibre Communications Conference OFC 2001, Anahaim, Cal, USA, March 17-22, 2001.). In einer ersten Regenerator-Stufe wird die Pulskompression in nichtlinearen Glasfasern bei sehr hohen Leistungen (Soliton Effekt, Pulse große Leistungen werden stärker komprimiert) für eine Entscheiderschwelle genutzt und eine spektrale Filterung zur Amplituden-Egalisierung eingesetzt (Puls-Kompression führt zu spektraler Verbreiterung, zu hohe Leistung wird durch spektrale Filter abgeschnitten). Der zeitliche Jitter wird in einer zweiten Stufe durch eine so genannte "synchrone Modulation" verbessert. Die Taktpulse treiben hier periodisch einen Modulator an, durch den die Datenpuls-Ausläufer außerhalb des Modulationsfensters abgeschnitten werden, wodurch der Datenpuls in Richtung seiner korrekten Zeit-Position geschoben wird. Die nichtlinearen Effekte in der Glasfaser sind so schnell, dass Datenmuster-Probleme in dieser Lösung nicht auftreten. Die Pulskompression erfordert aber eine Signalverstärkung zu sehr hohen Leistungen und große Längen der nichtlinearen Faser.

Ein optischer Signalgenerator nach dem Stand der Technik ist weiters aus WO-A-02/084900 bekannt.

Ausgehend von dem dargelegten Stand der Technik ist es deshalb Aufgabe der Erfindung, einen wellenlängen-erhaltenden rein optischen Signalregenerator anzugeben, in den degradierte optische Signale hoher Datenrate eingestrahlt und diese ohne opto-elektronische Wandlung und ohne Wellenlängen-Konversion bei geringem Leistungsbedarf unter Nutzung kompakter nichtlinearer Hableiterkomponenten regeneriert werden.

Die Aufgabe wird erfindungsgemäß durch einen wellenlängen-erhaltenden optischen Signalregenerator gelöst, aufweisend
- eine optische Taktregenerationsstufe, die zum Datensignal synchronisierte, in Amplitude, Zeittakt und Zeitlage stabile optische Reset-Taktpulse erzeugt, und
- mindestens eine bezüglich der Transmissionscharakteristik für das Datensignal nichtlineare Halbleiterkomponente sowie
- Mittel zum Einstrahlen eines Teils eines degradierten Datensignals in die optische Taktregenerationsstufe und
- Mittel zum Einstrahlen der in der Taktregenerationsstufe erzeugten optischen Taktpulse in die nichtlineare Halbleiterkomponente, wobei die Taktregenerationsstufe derart ausgebildet ist, dass die gewonnenen optischen Taktpulse eine eine optische Ansteuerung der Halbleiterkomponente gewährleistende Wellenlänge und eine die Halbleiterkomponente so sicher in den Zustand der Transparenz schaltende Leistung aufweist, dass ein getaktetes "optisches Reset" auf den Transparenz-Zustand hin erreicht wird,
- eine der Halbleiterkomponente vorgeschaltete Zeitlagen-Stelleinheit, die eine Abfolge der Daten-Bits in der zeitlichen Lücke zwischen jeweils zwei Reset-Taktpulsen vorgibt,
- Mittel zum Einstrahlen des anderen Teils des degradierten Datensignals in die Halbleiterkomponente mit einer solchen Leistung, bei der die aus der Transparenz relaxierende Halbleiterkomponente eine nichtlineare Transmissionscharakteristik für das Datensignal aufweist, und
- eine der Halbleiterkomponente nachgeschaltete Blockiereinheit, die die optischen Reset-Taktpulse aus dem Datensignal-Strahlgang entfernt, wobei sich die Reset-Taktpulse in Strahlrichtung, Wellenlänge oder Polarisation vom Datensignal unterscheiden.

In einer Ausführungsform der Erfindung ist vorgesehen, dass bei technischer Notwendigkeit zur Einstellung der Leistung von Daten- und/oder Taktsignal mindestens eine Leistungs-Einstelleinheit der Halbleiterkomponente vorgeschaltet ist.

Die folgenden Ausführungsformen betreffen die nichtlineare Halbleiterkomponente.

So ist diese zum Einen zur Entfernung von Rauschen und Störsignalen bei "0" Bits ein sättigbarer Absorber (SA) und das Datensignal weist eine solche Leistung auf, dass die Leistung der Störsignale bei "0" Bits das Absorptionsvermögen des aus der Transparenz relaxierenden sättigbaren Absorbers etwas unterschreitet, die Leistung der "1" Bits dagegen das Absorptionsvermögen des relaxierenden sättigbaren Absorbers klar überschreitet.

Zum Anderen ist die nichtlineare Halbleiterkomponente zur Regeneration der Amplitude der "1" Bits (Equalizer-Funktion) ein Halbleiterverstärker (SOA). Wird das Datensignal mit einer solchen Eingangsleistung in den aus der Transparenz relaxierenden nichtlinearen SOA eingestrahlt, dass die "1" Bits zur Sättigungsleistung am Ausgang führen, so werden Amplitudenschwankungen der "1" Bits durch die Leistungssättigung abgefangen und ein gewünschter "Equalizer-Effekt" wird erreicht.

Der erfindungsgemäße Regenerator zum Abfangen von Amplitudenschwankungen kann mit einfachen Mitteln zu einem Regenerator für Pulsformung (Re-Shaping) und der zeitlichen Pulslage (Re-Timing) erweitert werden. Hierfür ist die Form der Taktpulse wichtig, die gegebenenfalls durch der Taktregenerationsstufe nachgeschaltete Mittel zur Pulsformung so eingestellt wird, dass die Form der Lücke zwischen den Taktpulsen, invertiert in der Leistung, der gewünschten Ausgangs-Pulsform entspricht.

Die erfindungsgemäße Lösung beruht darauf, dass nicht nur das relaxierte System ohne optisches Signal einen definierten Zustand darstellt, sondern auch der durch ein starkes optisches Signal gesättigte in die Transparenz getriebene Halbleiter. Der gesättigte transparente Absorber wird eine Ladungsträgerdichte im Band haben, die bei der Signalwellenlänge eine Besetzungswahrscheinlichkeit von ½ hat. Nach physikalischen Grundprinzipien (Einstein-Koeffizienten) kann dieser Wert auch durch beliebige Erhöhung der eingestrahlten Lichtleistung nicht erhöht werden (Absorption = Verstärkung, Nettobilanz Null, Transparenz). Durch Einstrahlung eines starken Signals wird in einem gesättigten Absorber also ein definierter Zustand (Transparenz) eingestellt, unabhängig von der Vorgeschichte des Absorbers und unabhängig von der Leistung des Signals.

Zu bemerken ist, dass die ideale theoretische Transparenzbedingung (Besetzungswahrscheinlichkeit = ½) nur asymptotisch bei unendlich hoher Leistung erreicht wird, so wie auch ein zeitliches Abklingen nach einer Störung den idealen Gleichgewichtszustand asymptotisch erst nach unendlich langer Zeit erreicht. Für praktische Anwendungen ist das Erreichen dieser idealen theoretischen Grenzwerte nicht erforderlich. Ausreichend in der praktischen Anwendung ist eine solche Annäherung an den Gleichgewichtspunkt, dass die Vorgeschichte die Bearbeitung des nächsten nachfolgenden Signals nicht mehr wesentlich beeinflusst. Im Folgenden wird mit "Zustand der Transparenz" auf diese praxisbezogene Charakteristik Bezug genommen. Der so definierte Zustand der Transparenz wird wie folgt in der erfindungsgemäßen Lösung erreicht: Die der nichtlinearen Halbleiterkomponente, beispielsweise dem sättigbaren Absorber (SA), vorgeschaltete Zeitlagen-Stelleinheit und die Taktregenerationsstufe, die aus dem degradierten Datensignal einen Strom von synchronisierten, in Amplitude, Zeittakt und Zeitlage stabilen Reset-Taktpulsen erzeugt, geben zeitlich gesteuert zwischen jeweils zwei Reset-Pulsen einen Datenpuls geeigneter Wellenlänge (oberhalb der Bandkante) und ausreichender Leistung vor. Die Datenpulse werden damit zeitlich gesteuert in den Halbleiter eingestrahlt. Da - wie zuvor beschrieben - der Halbleiter mit hoher Geschwindigkeit einem ansteigenden optischen Signal folgt, wird hier ein ultraschnelles optisches Reset auf den definierten Zustand Transparenz erreicht. Der Effekt der Vorgeschichte wird abgefangen durch unterschiedlich starke Absorption/Transmission der Reset-Pulse. Ein Vorteil des periodischen Resets in der erfindungsgemäßen Lösung besteht darin, dass die Vorgeschichte jeweils nur aus einem einzigen Bit besteht, das entweder "1" oder "0" sein kann. Die Kompensation der Vorgeschichte ist somit einfacher, als dies bei Kompensation langer "1"- und "0"-Folgen wäre.

Bei der Verstärkungssättigung eines optischen Halbeiterverstärkers (SOA) sind dieselben physikalischen Grundlagen gültig wie beim SA, auch hier wird durch Einstrahlung eines starken optischen Signals die Besetzungswahrscheinlichkeit ½ (Transparenz) erreicht, ausgehend in diesem Fall von höherer Ladungsträgerdichte (Besetzung > ½, Verstärkung). Anzumerken ist hier, dass der Begriff Verstärkungssättigung den nichtlinearen Bereich des Verstärkers beschreibt, es für den Zustand der Transparenz des Verstärkers aber bisher keinen Fachbegriff gibt. Auch bei beliebiger Erhöhung der optisch eingestrahlten Leistung kann der Besetzungswert von ½ und die dazugehörende Ladungsträgerdichte nicht unterschritten werden. Somit wird auch ein SOA durch einen ausreichend starken optischen Reset-Puls geeigneter Wellenlänge (im Verstärkungsspektrum) in den definierten Zustand Transparenz gebracht, unabhängig von der Vorgeschichte. Der Effekt der Vorgeschichte wird durch die unterschiedliche Verstärkung der (nicht mehr benötigten) Reset-Pulse abgefangen.

Der erste Funktionsblock des erfindungsgemäßen Regenerators, die optische Taktregenerationsstufe, in die ein Teil des degradierten Datensignals eingestrahlt wird und die beispielsweise einen selbstpulsierenden DFB-Laser aufweist, gibt einen Strom von synchronisierten Taktpulsen vor. Der andere Teil des degradierten Datensignals gelangt in den zweiten Funktionsblock, der aus einem Halbleiter mit optisch nichtlinearen Transmissionseigenschaften für das Datensignal realisiert ist (SA, SOA). Die im ersten Funktionsblock erzeugten Taktpulse werden ebenfalls in den Funktionsblock "nichtlinearer Halbleiter" eingestrahlt und zwar in Wellenlänge, Strahlrichtung oder Polarisation unterscheidbar vom Datensignal, so dass Daten und Takt hinter dem Regenerator getrennt werden können. Die Wellenlänge der Taktpulse ist so gewählt, dass der Halbleiter damit (über Absorption oder Verstärkung) angesteuert werden kann (Photonenergie oberhalb der Bandkante). Ein erster entscheidender Punkt ist es nun, die Leistung des Taktsignals so einzustellen, dass die Taktpulse den Halbleiter sicher in den definierten Zustand der Transparenz (Besetzungswahrscheinlichkeit ½ bei der Taktwellenlänge) steuern, so dass eine getaktetes optisches Reset gewährleistet ist. Eine zweite entscheidende Maßnahme, die Datenpulse zeitlich verzögert nach einem Reset-Puls, also in der Lücke zwischen zwei Reset-Pulsen, in den Halbleiter einzustrahlen, ist durch eine geeignete Verzögerungsleitung realisiert. Die Leistung des Datensignals ist nun so eingestellt, dass das Datensignal durch den aus dem definierten Zustand der Transparenz relaxierenden Halbleiter über dessen nichtlineare Transmissionscharakteristik regenerativ geformt wird.

In einer anderen Ausführungsform der Erfindung ist der nichtlineare Halbleiterverstärker als Mehrsektions-Bauelement mit separaten elektrischen Kontakten ausgebildet. So kann in einer ersten verstärkenden Sektion der Leistungspegel für die Regeneration in einer nachgeschalteten zweiten nichtlinearen Sektion elektrisch eingestellt und angepasst werden. Es ist weiterhin vorgesehen, dass der Halbleiterverstärker in den Materialsystemen InP oder GaAs oder AlAs realisiert ist. In vorteilhaften Ausführungsformen sind die nichtlinearen Halbleiterkomponenten monolithisch integriert auf einer Halbleiterscheibe oder hybrid integriert auf einem passiven Wellenleiter-Material ausgebildet.

Die Taktregenerationsstufe kann einen selbstpulsierenden oder einen modengekoppelten Laser aufweisen.

Die folgenden Ausführungsformen der Erfindung betreffen den sättigbaren Absorber. So ist dieser als dünne Schicht ausgebildet, in die senkrecht eingestrahlt wird. Soll diese Absorberschicht gleichzeitig für mehrere Regeneratoren genutzt werden, so ist sie an unterschiedlichen Orten parallel von mehreren Signalen angesteuert. Beispielsweise kann die Schicht an mehreren Punkten nebeneinander von mehreren Signalen, z. B. in einem Wellenlängen-Multiplexsystem durchstrahlt werden. Der sättigbare Absorber kann aber auch in einer wellenleitenden Struktur ausgebildet sein. Vorzugsweise weist die dünne Absorberschicht elektrische Kontakte zur Einstellung ihrer Absorptionscharakteristik auf. Durch Anlegen einer Spannung oder durch Injizieren eines Stromes ist die Sättigungscharakteristik elektrisch einstellbar.

Ist es erforderlich, einen vollständigen 3R Regenerator zu realisieren, in dem sowohl das Rauschen und die Störsignale bei den "0" Bits beseitigt als auch die Amplitudenfluktuationen verhindert werden sollen, ist erfindungsgemäß in der nichtlinearen Halbleiterkomponente sowohl ein sättigbarer Absorber als auch ein Halbleiterverstärker kaskadiert angeordnet. Damit ist die erfindungsgemäße Lösung flexibel gestaltbar und kann für unterschiedliche Zwecke eingesetzt werden.

In einer Ausführungsform der Erfindung ist der Taktregenerationsstufe eine Pulsformungseinheit nachgeschaltet, die die optischen Taktpulse so formt, dass ihre leistungsinvertierte Form gerade der gewünschten Daten-Pulsform entspricht.

Die Blockiereinheit zum Entfernen der optischen Reset-Pulse aus dem Datensignal-Strahlengang ist in Abhängigkeit der Eigenschaften von Daten- und Taktsignal ein Wellenlängen- oder ein Polarisations- oder ein geometrisches Raumfilter.

Die erfindungsgemäße Lösung, bei der Datenmuster-Effekte durch getaktete Reset-Pulse verhindert werden, unterscheidet sich grundsätzlich von wellenlängen-konvertierenden Verfahren, bei denen das Datensignal den nichtlinearen Halbleiter ansteuert, diesen als Transmissions-Schalter entsprechend den "1" Bits bzw. "0" Bits öffnet bzw. schließt und so die Information auf ein Taktsignal oder ein konstantes Signal anderer Wellenlänge überträgt. In der erfindungsgemäßen Lösung wird die direkte nichtlineare Wirkung des Halbleiters auf das Signal ausgenutzt um dieses selbst ohne jede Wellenlängenumsetzung zu regenerieren. Die Regeneration bezüglich der verschiedenen Degradationen auf "1" Bits bzw. "0" Bits erfolgt in getrennten Stufen, die auch einzeln sinnvoll eingesetzt werden können, die aber auch - wie bereits erwähnt - zu einem vollen 3R Regenerator kombinierbar sind. Auch die Kombination der erfindungsgemäßen Regeneratoren mit Wellenlängen-Konversionstechniken kann bei entsprechenden Anforderungen und für bestimmte Anwendungen sinnvoll sein.

Die erfindungsgemäße Lösung beseitigt bei gegebenen Halbleiter-Materialien und Zeitkonstanten die Datenmuster-Abhängigkeit bei hohen Datenraten und gibt Anordnungen an, mit denen die verschiedenen benötigten Regenerationsfunktionen (Amplituden-Egalisierung, Zeitlagen-Einstellung und Störsignal-Unterdrückung) ohne Notwendigkeit einer Wellenlängen-Konversion realisiert werden können. Dabei ist ein hoher Schaltkontrast (wie für eine volle Transmissions-/Blockier-Funktion in bisherigen Lösungen) nicht nötig, sondern bereits schwache Transmissionsnichtlinearitäten können ausgenutzt werden.

Andere vorteilhafte Weiterbildungen der Erfindung sind in den Unteransprüchen gekennzeichnet bzw. werden nachstehend zusammen mit der Beschreibung von Ausführungsbeispielen der Erfindung anhand der Figuren näher dargestellt.

Es zeigen:
- Fig. 1:: schematisch degradierte Datensignale als Pulsfolge;
- Fig. 2:: schematisch degradierte Datensignale als Augendiagramm;
- Fig. 3:: Modellrechnungen zu einem SA, angesteuert im konventionellen Betrieb mit 10 Gb/s Datensignalen, für die Ladungsträgerdichte;
- Fig. 4:: Modellrechnungen zu einem SA, angesteuert im konventionellen Betrieb mit 10 Gb/s Datensignalen, für die Transmissionscharakteristik;
- Fig. 5:: schematische Darstellung der Abhängigkeit der Ladungsträgerdichte von der Leistung des eingestrahlten Taktsignals für SA und SOA;
- Fig. 6:: schematische Darstellung der Abhängigkeit der Ladungsträgerdichte eines SA bei Ansteuerung mit getaktetem optischen Reset;
- Fig. 7:: Modellrechnung zu einem SA gem. Fig. 3 und 4, jedoch bei Ansteuerung mit getaktetem optischen Reset;
- Fig. 8:: schematische Darstellung eines erfindungsgemäßen Regenerators mit nichtlinearem SOA;
- Fig. 9:: Augendiagramme (Eingang / Ausgang) eines Regenerators gem. Fig. 8;
- Fig. 10:: einen Regenerator gem. Fig. 8 im Blockschaltbild;
- Fig. 11:: ein Ausführungsbeispiel mit kaskadiert angeordneten SOA und SA im Blockschaltbild.

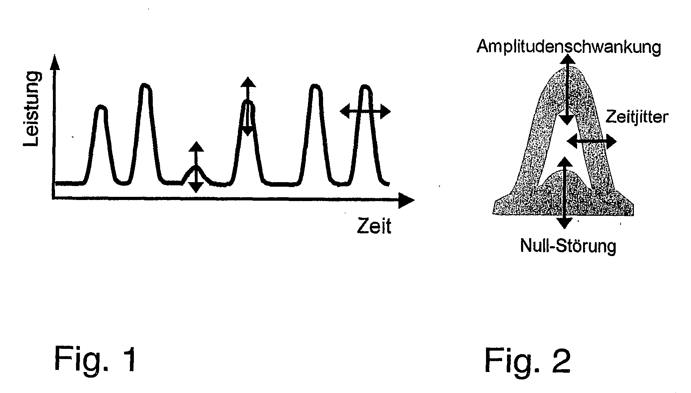

In Figur 1 sind degradierte Datensignale (Störsignale bei "0" Bits, Amplitudenfluktuation der "1" Bits und Zeiten-Jitter der "1" Bits) als Pulsfolge und in Figur 2 als Augendiagramm, bei dem alle Datenbits periodisch übereinander gezeichnet sind, dargestellt. Für eine fehlerfreie Datenerkennung muss das Augendiagramm klar offen sein.

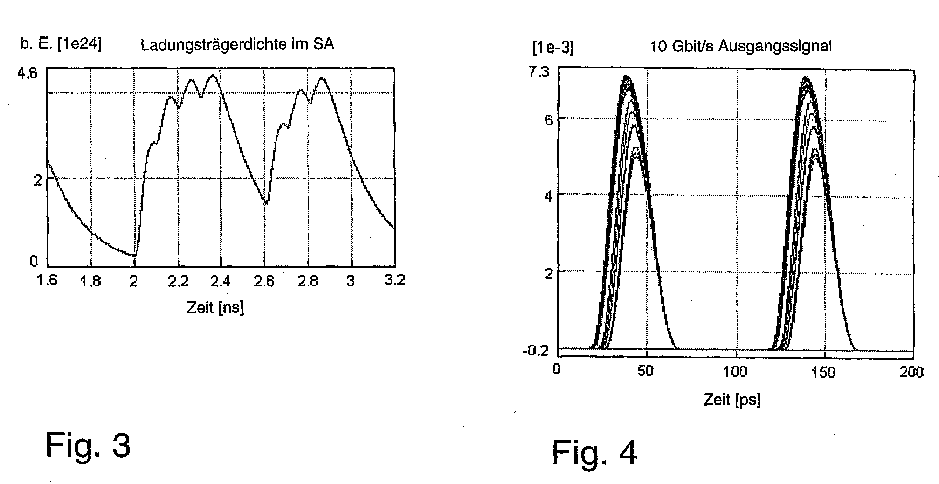

In Figur 3 ist das Ergebnis einer Modellrechnung für einen SA, angesteuert im konventionellen Betrieb mit 10 Gb/s Datensignalen, für die Ladungsträgerdichtemodulation und in Figur 4 für die Transmissionscharakteristik (Augendiagramm) dargestellt. Die Datenmusterabhängigkeit ist noch deutlich zu erkennen. Bei einem solchen bekannten SA relaxiert der Absorber schon bei dieser Datenrate zwischen den Bits nicht ausreichend in den Gleichgewichtszustand und weist somit sehr starke Datenmuster-Effekte auf. Nach einer "0"-Folge öffnet der SA bei Ankommen eines "1" Bits zeitlich verzögert und nicht vollständig. Die Schaltkurve des SA ist also im Vergleich zum ansteuernden Datensignal degradiert, weshalb das Bauelement so nicht zur Regeneration eingesetzt werden kann.

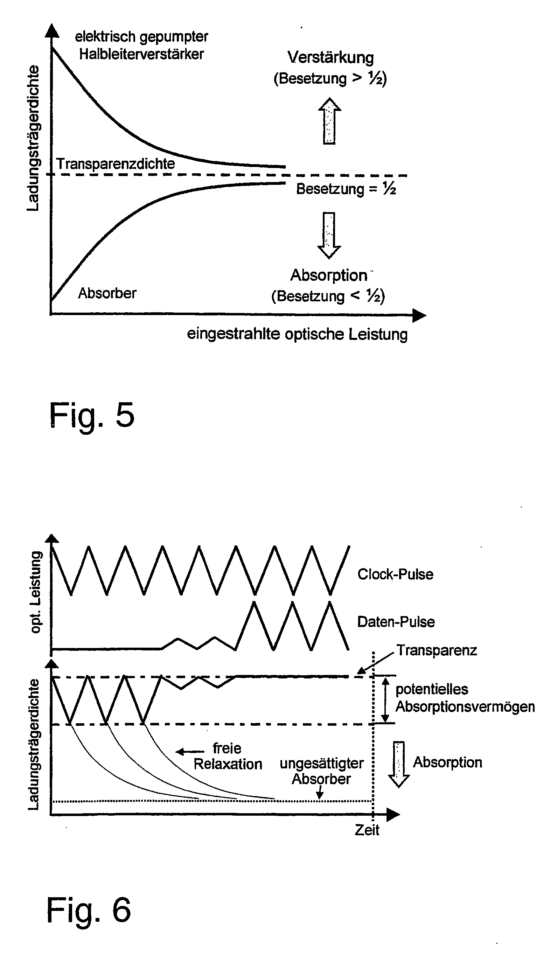

Figur 5 zeigt den Verlauf der Ladungsträgerdichte in Abhängigkeit von der eingestrahlten optischen Leistung. Ziel der erfindungsgemäßen Lösung ist es, wie bereits erwähnt, die Datenmuster-Abhängigkeit zu beseitigen.

Hierfür wird die Erkenntnis ausgenutzt, dass nicht nur das relaxierte System ohne optisches Signal einen definierten Zustand darstellt, sondern auch der durch ein starkes optisches Signal gesättigte Halbleiter. Wie bereits erwähnt, wird durch Einstrahlung eines ausreichend starken Signals in einem SA ein definierter Zustand, nämlich Transparenz, eingestellt (Absorption = Verstärkung, Nettobilanz Null, Transparenz). Dies erfolgt, unabhängig von der Vorgeschichte des SA und unabhängig von der Leistung des Signals. Dies gilt ebenso für einen SOA: Auch hier wird durch Einstrahlung eines starken optischen Signals die Besetzungswahrscheinlichkeit ½ erreicht (ausgehend hierbei von höherer Ladungsträgerdichte - Besetzung > ½, Verstärkung). Selbst bei beliebiger Erhöhung der optisch eingestrahlten Leistung kann der Besetzungswert von ½ und die entsprechende Ladungsträgerdichte nicht unterschritten werden.

In Figur 6 ist nun schematisch der Verlauf der Ladungsträgerdichte eines Absorbers in einem erfindungsgemäßen optischen Signalregenerator bei Ansteuerung mit getaktetem optischen Reset dargestellt. Zeitlich gesteuert durch die Taktregeneration und eine Verzögerungsleitung wird jeweils zwischen zwei Datenpulsen ein Reset-Puls geeigneter Wellenlänge (energetisch oberhalb der Bandkante) und ausreichender Leistung in die nichtlineare Halbleiterkomponente, hier einen SA, eingestrahlt. Wie bereits beschrieben, folgt die Halbleiterkomponente mit hoher Geschwindigkeit einem ansteigenden optischen Signal. Dadurch wird - wie erkennbar - ein ultraschnelles optisches Reset auf den gewünschten Zustand Transparenz erreicht. In der erfindungsgemäßen Lösung wird die "Vorgeschichte" abgefangen und reduziert auf nur jeweils ein einziges Bit, das "1" oder "0" sein kann.

Im Folgenden wird die regenerative Funktion eines erfindungsgemäßen optischen Signalregenerators mit einem sättigbaren Absorber (SA) oder einem Halbleiterverstärker (SOA) als nichtlinearer Halbleiterkomponente und bezüglich der Degradationstypen
- Rauschen und Störungen auf den "0" Bits,
- Amplitudenfluktuationen der "1" Bits und
- Zeit-Jitter der "1" Bits
erläutert.

Der für die Beseitigung von Rauschen und Störsignalen bei den "0" Bits benötigte Halbleiter ist ein SA. Der SA wird durch die Taktpulse in den definierten Zustand "Sättigung" gefahren, und zwar unabhängig von der Vorgeschichte des Absorbers. Die Vorgeschichte des Absorbers wirkt sich nur auf die transmittierte Leistung der - nicht weiter benötigten - Taktpulse aus. Jedes dem Taktpuls folgende Datenbit sieht also einen relaxierenden sättigbaren Absorber mit gleicher Charakteristik (optische Reset-Funktion), die wie folgt aussieht:
Nach Abfall des optischen Reset-Pulses relaxiert der sättigbare Absorber - wie bekannt - in Richtung einer höheren Absorption. Die absolute Transmissionsänderung pro Zeiteinheit ist in dem hier genutzten Zeitintervall direkt nach Abschalten des äußeren Signals größer als im weiteren Abklingverlauf, was in Figur 6 dargestellt ist. Bei gegebener Dynamik (bestimmt durch Material des SA und dessen Zeitkonstante) wird bei dem hier gewählten Reset-Arbeitspunkt der sättigbare Absorber und die Absorptionsänderung also am effektivsten ausgenutzt.

Durchstrahlt nun während des schnellen Absorptionsanstieges nach dem Reset-Puls ein "O" Bit mit Störungen den Absorber, so werden die kleinen Störsignale absorbiert und der Anstieg der Absorption verlangsamt. Durchstrahlt ein starker "1" Puls den Absorber, so werden diesem durch Absorption so viele Photonen entzogen wie zur Aufrechterhaltung der Sättigung bzw. der Transparenz erforderlich sind. Wichtig hierbei ist, dass im gesättigten Absorber diese Zahl der entzogenen Photonen nicht proportional der eingestrahlten optischen Leistung, sondern eine feste Zahl ist, durch die Eigenschaften des Absorbers gegeben bzw. einstellbar (z. B. Länge).

Durch den gesättigten Absorber werden also einem "1" Bit und den Störsignalen bei einem "0" Bit eine gleiche Zahl von Photonen entzogen. Die gleiche Photonen-Subtraktion bedeutet nun aber, dass die kleinen Störsignale bei der Position der "0" Bits relativ stärker geschwächt werden als die großen "1" Bit. Das Signal-Rausch-Verhältnis wird durch diese - dank dem getakteten Reset sehr exakt definierte - Photonen-Subtraktion also vergrößert, die Signalqualität bezüglich dieses Parameters wird verbessert. Hervorzuheben ist, dass die Datenmuster-unabhängige Funktion bei hohen Datenraten in der erfindungsgemäßen Lösung erreicht wird, ohne dass die Relaxationszeiten der Absorber erhöht werden müssen. Der Absorber muss nur über seine spezifische Sättigungscharakteristik und seine Länge so eingestellt werden, dass die zur Erhaltung der Sättigung erforderliche Photonenzahl der Zahl der erwarteten Stör-Photonen bei den "0" Bits entspricht.

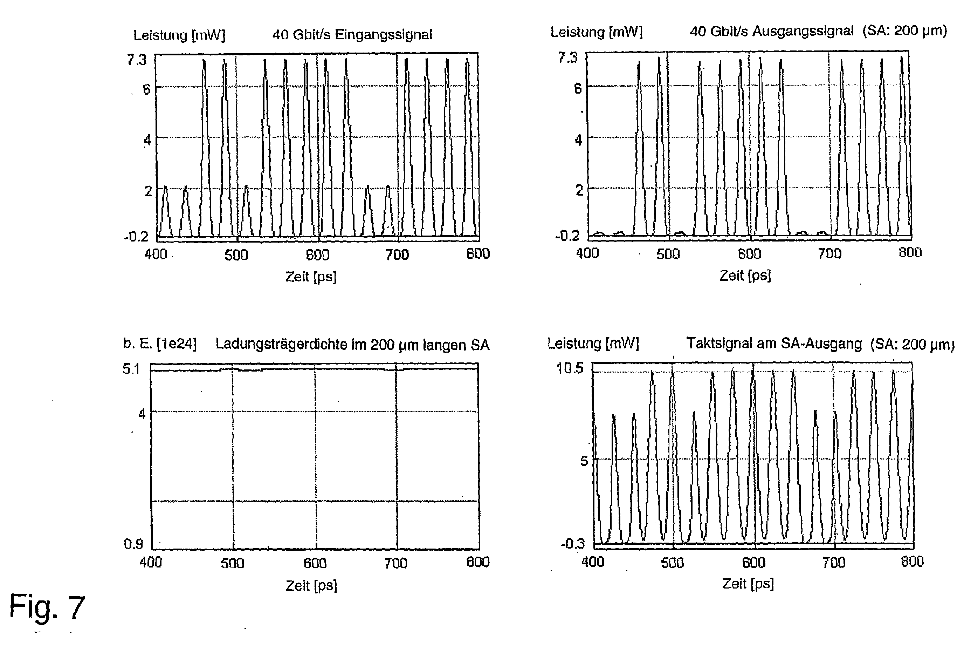

Modellrechnungen (kommerzielles Programm der Fa. VPI) bestätigen dieses Verhalten. In Figur 7 sind die Ergebnisse dieser Modellrechnungen bezüglich des Verhaltens eines sättigbaren Absorbers bei optisch getaktetem Reset dargestellt. Der identische Absorber, der im Normalbetrieb schon bei 10 Gbit/s starke Datenmuster-Effekte (s. Figur 3) bewirkte, funktioniert im optisch getakteten Reset-Betrieb selbst bei 40 Gbit/s regenerativ. Im Vergleich ist in der Figur das in den Signalregenerator eingestrahlte Datensignal mit Störungen auf den "0" Bits und das Ausgangssignal dargestellt. Die Ladungsträgerdichte ist im SA nahezu konstant, wie dies aus dem dritten Teilbild zu erkennen ist. Es treten nur geringe Ladungsträgerdichte-Modulationen auf, aber die Störsignale bei den "0" Bits werden durch den Regenerator abgeschnitten. Dies demonstriert, dass die Datenmuster-Effekte - wie im vierten Teilbild erkennbar- erfolgreich abgefangen und die Funktionsgeschwindigkeit bei gegebenem Material erheblich gesteigert wurde. Auch die 40 Gbit/s stellen noch nicht das Geschwindigkeitslimit dar.

Der für das Abfangen von Amplitudenfluktuationen bei den "1" Bits benötigte Halbleiter ist ein SOA. Wie bereits beschrieben, wird der SOA durch die Taktpulse in den definierten Zustand "Transparenz" gefahren, und zwar unabhängig von der Vorgeschichte des SOA. Jedes dem Taktpuls folgende Datenbit sieht also einen aus der Transparenz relaxierenden nichtlinearen SOA. Bekannt ist, dass im Bereich der Sättigungs-Ausgangsleistung eine weitere Erhöhung des Eingangssignals nicht zu einer weiteren Erhöhung des Ausgangsleistung führt. Wird das Datensignal mit einer solchen Eingangsleistung in den aus der Transparenz relaxierenden SOA eingestrahlt, dass die "1" Bits zur Sättigungsleistung am Ausgang führen, so werden Amplitudenschwankungen der "1" Bits durch die Leistungssättigung abgefangen und ein gewünschter "Equalizer-Effekt" wird erreicht. Zu bemerken ist, dass ohne die Reset-Pulse der SOA das erste "1" Bit nach einer langen "0" Bit Folge erheblich höher verstärken würde als die folgenden Bits, d.h. statt eines regenerativen Equalizer-Effektes würden datenmusterabhängige Amplitudenfluktuation erzeugt und das Signal degradiert. Die Reset-Pulse sind entscheidend für eine regenerative Wirkung.

Der erfindungsgemäße Regenerator zum Abfangen von Amplitudenschwankungen kann sehr leicht zu einem Regenerator für Pulsformung (Re-Shaping) und der zeitlichen Pulslage (Re-Timing) erweitert werden. Hierfür ist die Form der Taktpulse wichtig, die gegebenenfalls durch der Taktregenerationsstufe nachgeschaltete Mittel zur Pulsformung so eingestellt wird, dass die Form der Lücke zwischen den Taktpulsen, invertiert in der Leistung, der gewünschten Ausgangs-Pulsform entspricht.

Zwischen den getakteten Reset-Pulsen wird sich die Verstärkung des SOA erholen. Ein Datenpuls wird entsprechend dieser zeitlichen Verstärkungsänderung geformt: In der Lücke zwischen den Reset-Pulsen wird die Verstärkung höher sein, hier wird der Datenpuls mehr verstärkt, während in den Flanken der Reset-Pulse die Verstärkung kleiner ist, der Datenpuls wird hier beschnitten. Es ergibt sich hier eine Pulsformung durch die Reset-Puls-Flanken (Re-Shaping) und eine zeitliche Zentrierung der Datenpulse in die Mitte der Reset-Puls-Lücke (Re-Timing). Will man bestimmte Datenpuls-Formen oder -Längen erhalten, so kann der Reset-Puls in der erwähnten Pulsformungsstufe den Anforderungen angepasst werden.

Die Pulsformung und Puls-Taktungskorrektur nach dem obigen Prinzip hat ein sehr hohes Geschwindigkeitspotential. Deshalb muss bedacht werden, dass es neben der sehr effektiven aber relativ langsamen (Bereich 10 GHz) Verstärkungsmodulation durch Änderung der integralen Ladungsträgerdichte im SOA (Inter-Band) auch den Effekt des "spektralen Lochbrennens" gibt. Hierbei wird die spektrale Ladungsträgerdichteverteilung innerhalb eines Bandes des SOA (Intra-Band) durch ein starkes Signal beeinflusst und so im Bereich bis einige 10 nm vom Signal entfernt die Verstärkung moduliert. Dieser Effekt hat den großen Vorteil eines sehr hohen Geschwindigkeitspotentials bis in den THz Bereich, aber auch den Nachteil, dass die Verstärkungsmodulation wesentlich weniger effektiv ist. Der schnelle Intra-Band Effekt kann deshalb nur ausgenutzt werden, wenn Datenmuster-Effekte aufgrund des stärkeren und langsamen Inter-Band Effektes verhindert werden. In der vorgeschlagenen Anordnung werden nun die Effekte des Datenmusters auf die Ladungsträgerdichte kompensiert (auf die Reset-Pulse übertragen). Es verbleibt die Verstärkungsmodulation durch den schnellen Intraband-Effekt, der die inverse Pulsform der Reset-Pulse auf die Datenpulse überträgt und so für ein Re-Shaping und Re-Timing bei hohen Datenraten sorgt. Im folgenden Ausführungsbeispiel ist ein solcher Regenerator der Amplituden-Egalisierung, des Re-Timing und Re-Shaping und sind experimentelle Ergebnisse zu diesem beschrieben.

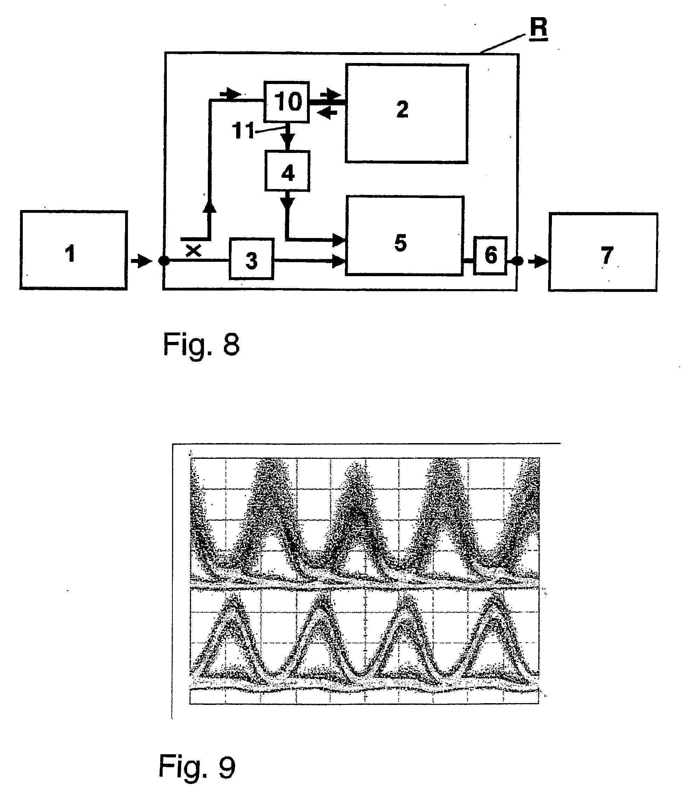

In Figur 8 ist ein derartiger erfindungsgemäßer Signalregenerator dargestellt. Ein degradiertes Signal 1 mit einer Wellenlänge von 1552 nm mit einer Pseudo Random Bit Sequenz (PRBS) bei einer Datenrate von 40 Gbit/s wird über eine Glasfaser in den Regenerator **R** eingestrahlt. Dort wird es in einem 3 dB-Koppler in zwei Teile aufgespalten. Der eine Signalteil wird zur Taktregeneration über einen Zirkulator **10** in eine, beispielsweise einen bei 40 GHz selbstpulsierenden DFB-Laser aufweisende, Taktregenerationsstufe **2** eingestrahlt. Hierdurch werden die vom selbst-pulsierenden Laser emittierten Pulse synchronisiert relativ zum Datensignal. Die am Ausgang des Zirkulators **10** erhaltenen synchronisierten Taktpulse **11** (Wellenlänge 1560 nm), die eine Sinus-Form haben und deren leistungs-invertierte Form der gewünschten Form der Ausgangspulse entspricht, werden mit einem linearen optischen Halbleiterverstärker **4** auf eine Leistung von 8 dBm verstärkt und dann in einen 2 mm langen nichtlinearen Halbleiterverstärker **5** (realisiert im Materialsystem InGaAsP und mit einem Verstärkungsspektrum im Bereich 1500 nm bis 1600 nm) eingestrahlt. Aufgrund der Länge des nichtlinearen Halbleiterverstärkers **5** und der gewählten Eingangsleistung wird der nichtlineare Halbleiterverstärker **5** zum Ersten in den definierten Zustand der Transparenz gefahren (getaktetes optisches Reset) und zum Zweiten die Verstärkung durch Intra-Band Effekte (Spektrales Lochbrennen) im Rhythmus und in Form der Taktpulse moduliert.

Der andere Teil des Datensignals **1** wird ebenfalls in den nichtlinearen Halbleiterverstärker **5** eingestrahlt (in gleicher Strahlrichtung wie die Reset-Pulse aber bei anderer Wellenlänge). Durch eine Verzögerungsleitung **3** wird die Zeitlage der Datenpulse so eingestellt, dass diese den nichtlinearen Halbleiterverstärker **5** genau in der Mitte zwischen zwei Reset-Taktpulsen erreichen und durchstrahlen. Hinter dem nichtlinearen Halbleiterverstärker **5** befindet sich eine Blockiereinheit für optische Reset-Pulse **6,** beispielsweise ein Wellenlängenfilter, das nur die Wellenlänge des gewünschten Datensignals **7** (hier 1552 nm) durchlässt, die Wellenlänge des optischen Reset-Signals (hier 1560 nm) aber abblockt. Das Signal durchläuft in diesem Ausführungsbeispiel den Regenerator **R** ohne opto-elektronische Wandlung und ohne Wellenlängenumsetzung. Es wird im Regenerator im wesentlichen ein mit einem optischen Reset-Signal getakteter Halbleiterverstärker und mit einer für den benötigten nichtlinearen Effekt ausreichenden Länge durchstrahlt.

In Figur 9 sind die Augendiagramme des in den Regenerator, der in Figur 8 schematisch dargestellt ist, eingestrahlten degradierten 40 Gbit/s Datensignals und des Ausgangssignals gezeichnet. An der breiten Spur im Maximum ist zu erkennen, dass erhebliche Amplitudenfluktuation auftreten, an der zeitlichen Breite der Anstiegsflanken ist ein erheblicher Zeit-Jitter abzulesen. Das nach Durchlauf durch den erfindungsgemäßen Signalregenerator erzeugte Ausgangssignal zeigt in beiden Bereichen ein viel klarere und schmalere Spur. Die Amplituden-Fluktuationen sind durch den Equalizer-Effekt bei Verstärkungs-Sättigung ausgeglichen worden, und die schnelle intra-band Verstärkungsmodulation der Taktpulse hat dem Datensignal ihr sinusförmiges Profil aufgeprägt und so die gewünschte Pulsformung und Zeitlagen-Einstellung bewirkt.

Die Funktion dieses Regenerators bei 40 Gbit/s ist damit experimentell belegt worden.

In den folgenden beiden Figuren sind Blockschaltbilder für Ausführungsbeispiele der Erfindung dargestellt.

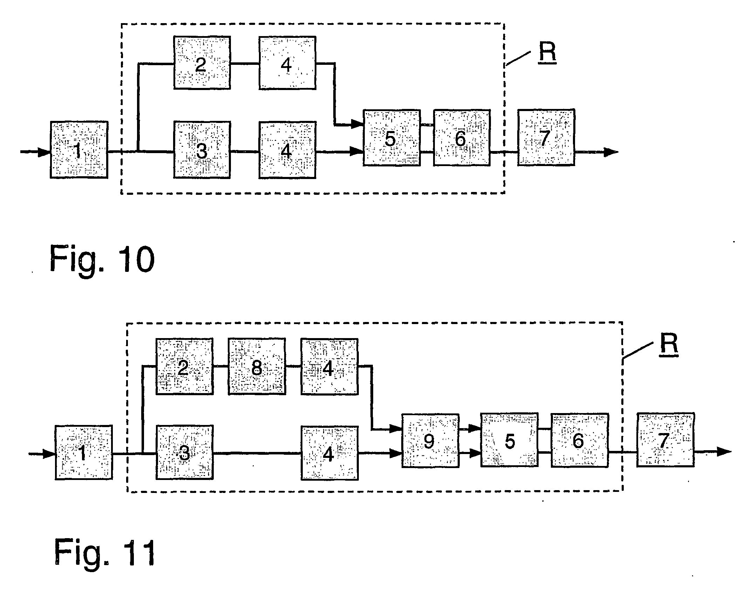

So ist in Figur 10 schematisch die in Figur 8 dargestellte erfindungsgemäße Anordnung eines optischen Signalregenerators als Blockschaltbild gezeigt. Wie bereits beschrieben, wird das degradierte Datensignal **1** in den Regenerator **R** eingespeist. Dieser Regenerator **R** umfasst eine Taktregenerationsstufe **2,** aufweisend beipielsweise einen DFB-Laser, in den ein Teil des degradierten Datensignals **1** eingespeist und zu einem Strom von synchronisierten, in Amplitude, Zeittakt und Zeitlage stabilen Pulsen regeneriert wird. Diese Taktpulse werden über eine Verstärkereinheit **4** in den nichtlinearen Halbleiterverstärker **5** geführt, ebenso der andere Teil des degradierten Datensignals **1,** der über eine Zeitstelleinheit **3** und ebenfalls über eine Verstärkereinheit **4** direkt in den nichtlinearen Halbleiterverstärker **5** eingespeist wird. Dem nichtlinearen Halbleiterverstärker **5** ist eine Blockiereinheit **6** für die optischen Reset-Pulse nachgeschaltet. Das erfindungsgemäße Ausführungsbeispiel liefert am Ausgang des Regenerators regenerierte Datensignale **7.**

Wie bereits erwähnt, ist die erfindungsgemäße Lösung flexibel gestaltbar, da sie weitere dem Anwendungszweck notwendige Mittel enthalten kann. In Figur 11 ist eine kaskadierte Anordnung der bisher einzeln beschriebenen Blöcke in einem Blockschaltbild dargestellt. So umfasst diese Anordnung neben den bisher oben erwähnten Bestandteilen eine weitere nichtlineare Halbleiterkomponente, einen sättigbaren Absorber **9.** In diesen werden die Datenteilströme geleitet, die zum einen in der Taktregenerationsstufe **2,** einer nachgeordneten Pulsformeinheit **8** und einer nachgeordneten Leistungsstelleinheit **4,** und zum anderen in der Zeitstelleinheit **3** und einer weiteren Leistungsstelleinheit **4** bearbeitet werden. Dem sättigbaren Absorber **9** ist hier der nichtlineare Halbleiterverstärker **5** nachgeschaltet. Eine Blockiereinheit **6** sorgt für das Ausfiltern der in der Taktregenerationsstufe erzeugten optischen Reset-Pulse. In der kaskadierten Anordnung von sättigbarem Absorber **9** und nichtlinearem Halbleiterverstärker **5** ist die Taktregenerationsstufe **2** als gemeinsame Stufe den beiden nichtlinearen Halbleiterkomponenten **5, 9** vorgeschaltet. Bei den regenerierten Datensignalen **7,** die am Ausgang des vollständigen 3R Regenerators **R** anliegen, ist nunmehr das Rauschen und die Störsignale bei den "0" Bits beseitigt als auch die Amplitudenfluktuation verhindert worden.

## Patentansprüche

1. Wellenlängen-erhaltender optischer Signalregenerator, aufweisend
- eine optische Taktregenerationsstufe (2), die zum Datensignal (1) synchronisierte, in Amplitude, Zeittakt und Zeitlage stabile optische Reset-Taktpulse erzeugt, und
- mindestens eine bezüglich der Transmissionscharakteristik für das Datensignal nichtlineare Halbleiterkomponente (5, 9) sowie
- Mittel zum Einstrahlen eines Teils eines degradierten Datensignals (1) in die optische Taktregenerationsstufe (2) und
- Mittel zum Einstrahlen der in der Taktregenerationsstufe (2) erzeugten optischen Taktpulse in die nichtlineare Halbleiterkomponente (5, 9), wobei die Taktregenerationsstufe (2) derart ausgebildet ist, dass die gewonnenen optischen Taktpulse eine eine optische Ansteuerung der Halbleiterkomponente (5, 9) gewährleistende Wellenlänge und eine die Halbleiterkomponente (5, 9) so sicher in den Zustand der Transparenz schaltende Leistung aufweist, dass ein getaktetes "optisches Reset" auf den Transparenz-Zustand hin erreicht wird,
- eine der Halbleiterkomponente (5, 9) vorgeschaltete Zeitlagen-Stelleinheit (3), die eine Abfolge der Daten-Bits in der zeitlichen Lücke zwischen jeweils zwei Reset-Taktpulsen vorgibt,
- Mittel zum Einstrahlen des anderen Teils des degradierten Datensignals (1) in die Halbleiterkomponente (5, 9) mit einer solchen Leistung, bei der die aus der Transparenz relaxierende Halbleiterkomponente (5, 9) eine nichtlineare Transmissionscharakteristik für das Datensignal aufweist, und
- eine der Halbleiterkomponente (5, 9) nachgeschaltete Blockiereinheit (6), die die optischen Reset-Taktpulse aus dem Datensignal-Strahlgang entfernt, wobei sich die Reset-Taktpulse in Strahlrichtung, Wellenlänge oder Polarisation vom Datensignal unterscheiden.

2. Signalregenerator nach Anspruch 1,
bei dem zur Einstellung der Leistung von Daten- und/oder Taktsignal mindestens eine Leistungs-Einstelleinheit (4) der Halbleiterkomponente vorgeschaltet ist.

3. Signalregenerator nach Anspruch 1,
bei dem die nichtlineare Halbleiterkomponente ein sättigbarer Absorber (9) ist und das Datensignal eine solche Leistung aufweist, dass die Leistung der Störsignale bei "0" Bits das Absorptionsvermögen des aus der Transparenz relaxierenden sättigbaren Absorbers (9) etwas unterschreitet, die Leistung der "1" Bits dagegen das Absorptionsvermögen des relaxierenden sättigbaren Absorbers (9) klar überschreitet.

4. Signalregenerator nach Anspruch 1,
bei dem die nichtlineare Halbleiterkomponente ein Halbleiterverstärker (5) ist und das Datensignal eine solche Leistung aufweist, dass Amplitudenschwankungen auf den "1" Bits durch den aus der Transparenz relaxierenden nichtlinearen Halbleiterverstärker (5) auf eine gleiche Ausgangsamplitude eingestellt werden.

5. Signalregenerator nach Anspruch 1,
bei dem der Taktregenerationsstufe (2) eine Pulsformungseinheit (8) nachgeschaltet ist, die die optischen Taktpulse so formt, dass ihre leistungsinvertierte Form gerade der gewünschten Daten-Pulsform entspricht.

6. Signalregenerator nach Anspruch 4,
bei dem der nichtlineare Halbleiterverstärker als Mehrsektions-Bauelement ausgebildet ist.

7. Signalregenerator nach Anspruch 1,
bei dem die Taktregenerationsstufe (2) einen selbstpulsierenden Laser aufweist.

8. Signalregenerator nach Anspruch 1,
bei dem die Taktregenerationsstufe (2) einen modengekoppelten Laser aufweist.

9. Signalregenerator nach Anspruch 3,
bei dem der aus der Transparenz relaxierende sättigbare Absorber (9) als dünne Schicht ausgebildet ist, in die senkrecht eingestrahlt wird.

10. Signalregenerator nach Anspruch 9,
bei dem die dünne Schicht an unterschiedlichen Orten parallel von mehreren Signalen angesteuert ist.

11. Signalregenerator nach Anspruch 3,
bei dem der aus der Transparenz relaxierende gesättigte Absorber (9) in einer wellenleitenden Struktur ausgebildet ist.

12. Signalregenerator nach Anspruch 3,
bei dem der aus der Transparenz relaxierende sättigbare Absorber (9) elektrische Kontakte zur Einstellung der Absorptionscharakteristik aufweist.

13. Signalregenerator nach Anspruch 4,
bei dem der Halbleiterverstärker (5) in den Materialsystemen InP oder GaAs oder AlAs realisiert ist.

14. Signalregenerator nach Anspruch 1,
bei dem ein aus der Transparenz relaxierender sättigbarer Absorber (9) und ein Halbleiterverstärker (5) kaskadiert angeordnet sind.

15. Signalregenerator nach Anspruch 14,
bei dem die nichtlinearen Halbleiterkomponenten (5, 9) monolithisch integriert auf einer Halbleiterscheibe ausgebildet sind.

16. Signalregenerator nach Anspruch 14,
bei dem die nichtlinearen Halbleiterkomponenten (5, 9) hybrid integriert auf einem passiven Wellenleiter-Material ausgebildet sind.

17. Signalregenerator nach Anspruch 1,
bei dem die Blockiereinheit (6) ein Wellenlängenfilter ist.

18. Signalregenerator nach Anspruch 1,
bei dem die Blockiereinheit (6) ein Polarisationsfilter ist.

19. Signalregenerator nach Anspruch 1,
bei dem die Blockiereinheit (6) ein geometrisches Raumfilter ist.

## Claims

1. Wavelength-maintaining optical signal regenerator, having
- an optical clock-pulse regeneration stage (2), which generates optical reset clock pulses which are synchronized to the data signal (1) and are stable in their amplitude, time clock-pulse and time position, and
- at least one semiconductor component (5, 9) which is non-linear with respect to the transmission characteristic for the data signal, and
- means for beaming a portion of the degraded data signal (1) into the optical clock-pulse regeneration stage (2), and
- means for beaming the optical clock pulses generated in the clock-pulse regeneration stage (2) into the non-linear semiconductor component (5, 9), the clock-pulse regeneration stage (2) being of such design that the obtained optical clock pulses are of a wavelength that ensures optical activation of the semiconductor component (5, 9), and are of a power that switches the semiconductor component (5, 9) into the transparency state in such a reliable manner that a clock-pulse controlled "optical reset" to the transparency state is achieved,
- a time-position setting unit (3), which is connected on the incoming side of the semiconductor component (5, 9) and defines a sequence of the data bits in the time gap between respectively two reset clock pulses,
- means for beaming the other portion of the degraded data signal (1) into the semiconductor component (5, 9) at such a power at which the semiconductor component (5, 9) relaxing out of transparency has a non-linear transmission characteristic for the data signal, and
- a blocking unit (6), which is connected on the outgoing side of the semiconductor component (5, 9) and removes the optical reset clock pulses from the data signal beam path, the reset clock pulses differing from the data signal in beam direction, wavelength or polarization.

2. Signal regenerator according to claim 1,
wherein, for the purpose of setting the power of a data and/or clock-pulse signal, at least one power-setting unit is connected (4) on the incoming side of the semiconductor component.

3. Signal regenerator according to claim 1,
wherein the non-linear semiconductor component is a saturable absorber (9), and the data signal is of such a power that the power of the interfering signals in the case of "0" bits is somewhat less than the absorption capacity of the saturable absorber (9) relaxing out of transparency, whereas the power of the "1" bits clearly exceeds the absorption capacity of the relaxing saturable absorber (9).

4. Signal regenerator according to claim 1,
wherein the non-linear semiconductor component is a semiconductor amplifier (5), and the data signal is of such a power that amplitude fluctuations on the "1" bits are set to a uniform output amplitude by the non-linear-semiconductor amplifier (5) relaxing out of transparency.

5. Signal regenerator according to claim 1,
wherein a pulse-shaping unit (8) is connected on the outgoing side of the clock-pulse regeneration stage (2), said unit shaping the optical clock pulses in such a way that their power-inverted shape corresponds exactly to the desired data pulse shape.

6. Signal regenerator according to claim 4,
wherein the non-linear semiconductor amplifier is designed as a multi-section component.

7. Signal regenerator according to claim 1,
wherein the clock-pulse regeneration stage (2) has a self-pulsing laser.

8. Signal regenerator according to claim 1,
wherein the clock-pulse regeneration stage (2) has a mode-coupled laser.

9. Signal regenerator according to claim 3,
wherein the saturable absorber (9) relaxing out of transparency is designed as a thin layer, into which a beam is directed perpendicularly.

10. Signal regenerator according to claim 9,
wherein the thin layer is activated at different locations at the same time, by a plurality of signals.

11. Signal regenerator according to claim 3,
wherein the saturated absorber (9) relaxing out of transparency is designed to have a wave-guiding structure.

12. Signal regenerator according to claim 3,
wherein the saturable absorber (9) relaxing out of transparency has electrical contacts for setting the absorption characteristic.

13. Signal regenerator according to claim 4,
wherein the semiconductor amplifier (5) is realized in the material systems InP or GaAs or AlAs.

14. Signal regenerator according to claim 1,
wherein a saturable absorber (9) relaxing out of transparency and a semiconductor amplifier (5) are arranged in a cascaded manner.

15. Signal regenerator according to claim 14,
wherein the non-linear semiconductor components (5, 9) are monolithically integrated on a semiconductor wafer.

16. Signal regenerator according to claim 14,
wherein the non-linear semiconductor components (5, 9) are integrated in a hybrid manner on a passive waveguide material.

17. Signal regenerator according to claim 1,
wherein the blocking unit (6) is a wavelength filter.

18. Signal regenerator according to claim 1,
wherein the blocking unit (6) is a polarization filter.

19. Signal regenerator according to claim 1,
wherein the blocking unit (6) is a geometrical-shape filter.

## Revendications

1. Régénérateur de signaux optiques à conservation de longueurs d'onde comprenant :
- un étage de régénération d'impulsions optiques (2) qui génère des impulsions d'horloge optiques « reset » stables au niveau de l'amplitude, de l'horloge et de la position de temps, synchronisées avec le signal de donnée (1), et
- au moins un composant à semi-conducteur (5, 9) non linéaire concernant la caractéristique de transmission pour le signal de donnée, ainsi que
- des moyens pour injecter une partie d'un signal de donnée (1) dégradé dans l'étage de régénération d'impulsions optiques (2), et
- des moyens pour injecter les impulsions d'horloge générées dans l'étage de régénération d'impulsions (2) dans le composant à semi-conducteur (5, 9) non linéaire, l'étage de régénération d'impulsions (2) étant configuré pour que les impulsions d'horloge optiques obtenues présentent une longueur d'onde assurant une commande optique du composant à semi-conducteur (5, 9), et une puissance pour commuter le composant à semi-conducteur (5, 9) à l'état de transparence de façon suffisamment sûre pour obtenir un « reset optique » synchronisé pour arriver à l'état de transparence,
- une unité de réglage de position de temps (3) située en amont du composant à semi-conducteur (5, 9), et qui détermine une suite des bits de donnée dans le créneau de temps entre respectivement deux impulsions d'horloge « reset »,
- des moyens pour injecter l'autre partie du signal de donnée (1) dégradé dans le composant à semi-conducteur (5, 9) avec une puissance à laquelle le composant à semi-conducteur (5, 9) relaxé de la transparence présente une caractéristique de transmission non linéaire pour le signal de donnée, et
- une unité de blocage (6) située en aval du composant à semi-conducteur (5, 9), qui élimine les impulsions d'horloge optiques « reset » du faisceau du signal de donnée, les impulsions d'horloge « reset » présentant une direction de faisceau, une longueur d'onde ou une polarisation différentes du signal de donnée.

2. Régénérateur de signaux selon la revendication 1,
dans lequel au moins une unité de réglage de puissance (4) est placée en amont du composant à semi-conducteur pour régler la puissance du signal de donnée et/ ou d'horloge.

3. Régénérateur de signaux selon la revendication 1,
dans lequel le composant à semi-conducteur non linéaire est un absorbeur saturable (9) et le signal de donnée présente une puissance telle que la puissance de signaux parasites aux bits « 0 » reste légèrement en dessous de la capacité d'absorption de l'absorbeur saturable (9) relaxant de la transparence, mais que la puissance des bits « 1 » dépasse par contre clairement la capacité d'absorption de l'absorbeur saturable (9) relaxant.

4. Régénérateur de signaux selon la revendication 1,
dans lequel le composant à semi-conducteur non linéaire est un amplificateur à semi-conducteur (5) et le signal de donnée présente une puissance telle que des variations d'amplitude sur les bits « 1 » sont réglées sur une même amplitude de sortie par l'amplificateur à semi-conducteur (5) non linéaire relaxant de la transparence.

5. Régénérateur de signaux selon la revendication 1,
dans lequel une unité de conformation d'impulsions (8) est placée en aval de l'étage de régénération d'impulsions (2), et forme les impulsions d'horloge optiques de sorte que leur forme à puissance inversée correspond justement à la forme d'impulsion de donnée souhaitée.

6. Régénérateur de signaux selon la revendication 4,
dans lequel l'amplificateur à semi-conducteur est un composant à sections multiples.

7. Régénérateur de signaux selon la revendication 1,
dans lequel l'étage de régénération d'impulsions (2) présente un laser autopulsé.

8. Régénérateur de signaux selon la revendication 1,
dans lequel l'étage de régénération d'impulsions (2) présente un laser modal.

9. Régénérateur de signaux selon la revendication 3,
dans lequel l'absorbeur saturable (9) relaxant de la transparence est formé par une couche mince que l'on irradie perpendiculairement.

10. Régénérateur de signaux selon la revendication 9,
dans lequel la couche mince est commandée à différents endroits parallèlement par plusieurs signaux.

11. Régénérateur de signaux selon la revendication 3,
dans lequel l'absorbeur saturable (9) relaxant de la transparence est formé dans une structure de guides d'ondes.

12. Régénérateur de signaux selon la revendication 3,
dans lequel l'absorbeur saturable (9) relaxant de la transparence présente des contacts électriques pour régler la caractéristique d'absorption.

13. Régénérateur de signaux selon la revendication 4,
dans lequel l'amplificateur à semi-conducteur (5) est réalisé dans les systèmes matériaux InP ou GaAs ou AlAs.

14. Régénérateur de signaux selon la revendication 1,
dans lequel un absorbeur saturable (9) relaxant de la transparence et un amplificateur à semi-conducteur (5) sont disposés en cascade.

15. Régénérateur de signaux selon la revendication 14,
dans lequel les composants à semi-conducteur (5, 9) non linéaires sont intégrés de façon monolithique sur une plaquette à semi-conducteur.

16. Régénérateur de signaux selon la revendication 14,
dans lequel les composants à semi-conducteur (5, 9) non linéaires sont intégrés de façon hybride sur un matériau à guide d'ondes passif.

17. Régénérateur de signaux selon la revendication 1,
dans lequel l'unité de blocage (6) est un filtre de guide d'ondes.

18. Régénérateur de signaux selon la revendication 1,
dans lequel l'unité de blocage (6) est un filtre de polarisation.

19. Régénérateur de signaux selon la revendication 1,
dans lequel l'unité de blocage (6) est un filtre spatial géométrique.
